# EUROPEAN PATENT SPECIFICATION

(11) **EP 2 720 508 B1**
(45) Date of publication and mention of the grant of the patent: **17.01.2018**
(21) Application number: 12800277.1
(22) Date of filing: 13.06.2012
(51) Int. Cl.: H04W 48/18

(54) **METHOD, TERMINAL AND NETWORK DEVICE FOR DISTRIBUTING DATA TO WIRELESS LOCAL AREA NETWORK**
VERFAHREN, ENDGERÄT UND NETZWERKVORRICHTUNG ZUM VERTEILEN VON DATEN AN EIN DRAHTLOSES LOKALES NETZWERK
PROCÉDÉ, TERMINAL ET DISPOSITIF DE RÉSEAU POUR DISTRIBUER DES DONNÉES À UN RÉSEAU LOCAL SANS FIL

(30) Priority: 14.06.2011 CN 201110159205
(43) Date of publication of application: 16.04.2014
(73) Proprietor: Huawei Technologies Co., Ltd., Longgang District Shenzhen, Guangdong 518129 (CN)
(72) Inventor: LIU, Hai, Shenzhen Guangdong 518129 (CN); JIN, Weisheng, Shenzhen Guangdong 518129 (CN)
(74) Representative: Gill Jennings & Every LLP
(86) International application number: PCT/CN2012/076810
(87) International publication number: WO 2012/171456

(56) References cited:
- CN-A- 1 754 345
- CN-A- 101 951 551
- CN-A- 101 984 713
- US-A1- 2008 205 345
- US-A1- 2010 291 863
- US-A1- 2011 075 557
- US-A1- 2011 134 898

## Description

### TECHNICAL FIELD

The present invention relates to mobile communications technologies, and in particular, to a method for distributing data to a wireless local area network, a terminal, and a network device.

### BACKGROUND

With the dramatic growth of data communications worldwide, 2G/3G networks and long term evolution (Long Term Evolution, LTE) networks bear heavier and heavier data communication load. Of course, with the technological progress, a wireless local area network (Wireless Local Area network, WLAN) is able to accomplish larger and larger data throughput. Compared with 2G/3G/LTE networks, a WLAN network is easy to be constructed and cost low. A lot of data services used by users, for example, surfing the Internet, do not require particularly high quality of service assurance, and therefore, some data traffic on a 2G/3G/LTE network can be offloaded to a WLAN network.

In the prior art, the solution of offloading some data traffic on a 2G/3G/LTE network to a WLAN network requires very high power consumption of a terminal, which decreases the standby time of the terminal.

United States Patent Application Publication No. 2010/0291863 A1 describes a method for allowing a mobile device in a mobile network to scan for and connect to a WLAN service.

United States Patent Application Publication No. 2011/0075557 A1 describes a method for offloading data to an alternative communication network based on packet inspection.

United States Patent Application Publication No. 2008/0205345 A1 describes a method for handing over a session from a first network to a second.

### SUMMARY

Embodiments of the present invention provide a method by a terminal, according to independent Claim 1, for distributing data to a wireless local area network, a method by a network device, according to independent Claim 7, for distributing data to a wireless local area network, a terminal, according to independent Claim 10, and a network device, according to independent Claim 11. In one aspect, a method for distributing data to a wireless local area network is provided, including: receiving, by a terminal, an indication message sent by an access network of a cellular network, wherein the indication message is used to indicate a wireless local area network, WLAN, which the terminal can access, trigger the terminal to enable a function of the WLAN network and access the WLAN network; and transmitting, by the terminal, directly over the WLAN network, service data that needs to be distributed after accessing the WLAN network; wherein the indication message carries WLAN network identifier information of the WLAN network accessed by the terminal, wherein the method further comprises: sending, by the terminal, related information of the terminal to the access network of the cellular network, causing the network to determine, according to correspondence between the related information of the terminal and WLAN network identifier information, the WLAN network accessed by the terminal and the WLAN network identifier information of the WLAN network, wherein the related information of the terminal comprises location information of the terminal.

In one aspect, a method for distributing data to a wireless local area network is provided, including: determining, by an access network of a cellular network, that service data of a terminal needs to be distributed to a wireless local area network, WLAN, network, and sending an indication message to the terminal, wherein the indication message is used to indicate a WLAN network which the terminal can access, instruct the terminal to enable a function of a WLAN and access the WLAN network, distributing service data, which needs to be distributed, directly to the accessed WLAN network for transmission; wherein the indication message carries WLAN network identifier information of the WLAN network accessed by the terminal; wherein the method further comprises: receiving, by the terminal, related information of the terminal sent by the terminal, causing the WLAN network accessed by the terminal and WLAN network identifier information of the WLAN network to be determined according to correspondence between the related information of the terminal and WLAN network identifier information, wherein the related information of the terminal comprises location information of the terminal; wherein, the sending an indication message to the terminal comprises: carrying the WLAN network identifier information of the WLAN network in the indication message, wherein the indication message is used to instruct the terminal to enable the function of the WLAN, causing the terminal to access the WLAN network indicated by the WLAN network identifier information after receiving the indication message.

In one aspect, a terminal is provided, including: a receiving and accessing module, configured to receive an indication message sent by an access network of a cellular network, wherein the indication message is used to indicate a wireless local area network, WLAN, which the terminal can access, trigger the terminal to enable a function of the WLAN network and access the WLAN network; wherein the indication message carries WLAN network identifier information of the WLAN network accessed by the terminal; wherein the terminal further comprises: a distributing module, configured to transmit, according to the WLAN network accessed by the receiving and accessing module, service data, which needs to be distributed, directly over the WLAN network; and a reporting module, configured to send related information to the access network of the cellular network, causing the access network of the cellular network to determine, according to correspondence between related information of the terminal and WLAN network identifier information, the WLAN network accessed by the terminal and the WLAN network identifier information of the WLAN network, wherein the related information of the terminal comprises location information of the terminal.

In one aspect, a network device is provided, including:
a judging module, configured to determine that service data of a terminal needs to be distributed to a wireless local area network, WLAN, network; an indicating module, configured to send an indication message to the terminal according to that the judging module determines that service data of the terminal needs to be distributed to a WLAN network, wherein the indication message is used to indicate a WLAN network which the terminal can access, instruct the terminal to enable a function of a WLAN and access the WLAN network, and distribute service data, which needs to be distributed, directly to the accessed WLAN network for transmission; and the receiving module is configured to receive related information of the terminal sent by the terminal, determine, according to correspondence between the related information of the terminal and WLAN network identifier information, the WLAN network accessed by the terminal and WLAN network identifier information of the WLAN network, wherein the related information of the terminal comprises location information of the terminal; and the indicating module is configured to send, to the terminal, according to that the judging module determines that service data of the terminal needs to be distributed to a WLAN network, the indication message that carries the WLAN network indentifier information of the WLAN network, wherein the indication message is used to instruct the terminal to enable a function of a WLAN and access the WLAN network indicated by the WLAN network identifier information, and distribute the service data, which needs to be distributed, directly to the accessed WLAN network for transmission.

By using the foregoing technical solutions, when a data service needs to be implemented, a terminal can receive an indication message sent by an access network of a cellular network, and trigger, according to the indication message, a function of a WLAN of the terminal to access the WLAN network, so that data can be distributed to the WLAN network. In this way, the function of the WLAN is not enabled all the time, but is enabled only when a data service needs to be implemented, thereby reducing power consumption of the terminal. In addition, when distribution is needed, the function of the WLAN is triggered by using the indication message, so that the WLAN network can be timely accessed to implement the distribution, which avoids a problem that distribution cannot be implemented because the function of the WLAN is disabled and thereby improves the effect of the distribution.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a schematic flowchart of a method according to a first embodiment of the present invention;
FIG. 2 is a schematic flowchart of a method according to a second embodiment of the present invention;
FIG. 3 is a schematic flowchart of a method according to a third embodiment of the present invention;
FIG. 4 is a schematic flowchart of a method according to a fourth embodiment of the present invention;
FIG. 5 is a schematic structural diagram of a terminal according to a fifth embodiment of the present invention; and
FIG. 6 is schematic structural diagram of a network device according to a sixth embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In the embodiments of the present invention, a WLAN management module may be set on both a terminal side and a network side. The WLAN management module on the terminal side is configured to receive an indication message sent by the WLAN management module on the network side. After receiving the indication message, the WLAN management module on the terminal side triggers a WLAN module on the terminal side to access a WLAN. Then, an application or an operating system of the terminal can distribute data to the accessed WLAN directly by using the enabled WLAN module. By using the method provided in the embodiments of the present invention, the WLAN module on the terminal side can maintain a disabled state in general cases to reduce power consumption of the terminal side; and when distribution is needed, for example, when the terminal side requires a data service, the WLAN management module on the terminal side triggers the WLAN module to access a WLAN, so that the WLAN can be timely accessed to achieve the effect of the distribution. The network side provided in embodiments of the present invention may specifically be an access network of a cellular network.

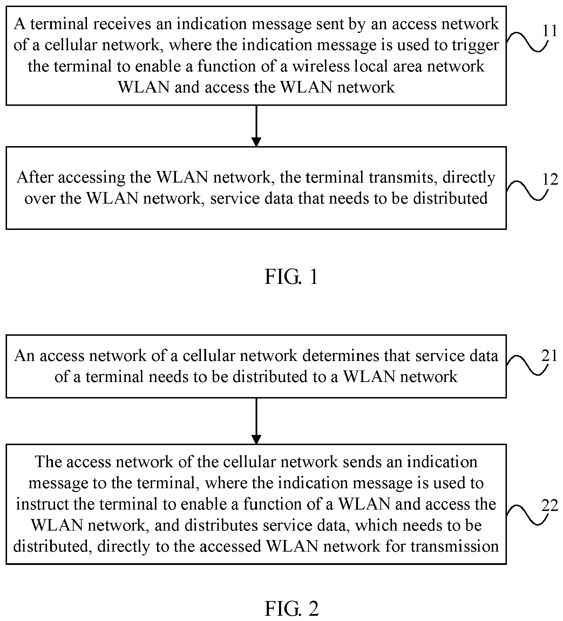

FIG. 1 is a schematic flowchart of a method according to a first embodiment of the present invention, including the following:
Step 11: A terminal receives an indication message sent by an access network of a cellular network, where the indication message is used to trigger the terminal to enable a function of a WLAN and access the WLAN network.

The terminal device may firstly establish an Internet Protocol (Internet Protocol, IP) connection with a network device, and then transmit the indication message through the established IP connection. Or, the terminal device does not need to establish a connection with a network device, but sends the indication message directly by using radio resource control (Radio Resource Control, RRC) signaling.

In addition, the method may further include: sending, by the terminal, an activate packet data protocol (Packet Data Protocol, PDP) context message to the access network of the cellular network, so that the access network of the cellular network learns that the terminal needs to implement a data service and determines that the terminal has a WLAN access capability; or, establishing a bearer with the access network of the cellular network, and transmitting service data over the established bearer, so that the access network of the cellular network learns that the terminal needs to implement a data service and determines that the terminal has a WLAN access capability. The data service includes but is not limited to a speech service and an Internet access service.

A foregoing indication information may be sent by the access network of the cellular network when the access network learns that the terminal needs to implement a data service and determines that the terminal has a WLAN access capability.

In addition, the access network of the cellular network may determine whether the terminal can access a WLAN by using the following method. For example, the access network of the cellular network learns whether there is an available WLAN network around the terminal according to a system configuration or a terminal report. When there is an available WLAN network around the terminal, it indicates that the terminal can access a WLAN network. Or, if the access network of the cellular network needs to send WLAN network identifier information of an accessed WLAN network to the terminal, the access network of the cellular network may determine whether the terminal can access a WLAN, and WLAN network identifier information of the corresponding accessible WLAN network according to configured correspondence between related information of the terminal and WLAN network identifier information, where the related information of the terminal may include at least location information of the terminal. For example, the terminal reports location information of the terminal, and if the access network of the cellular network can find WLAN network identifier information corresponding to the location information in the configured correspondence, the access network of the cellular network determines that an accessible WLAN network is available, and determines WLAN network identifier information of the accessible WLAN network.

In addition, the indication message may not carry the network identifier information indicating a WLAN network accessed by the terminal. In this case, after receiving the indication message, the terminal may select, by using an application of the terminal, an accessed WLAN network. For example, various mainstream operating systems at present can all provide good management on WLAN networks and 2G/3G/LTE networks. For example, the Microsoft windows mobile operating system and the RIM operating system provide a connection manager that encapsulates the management on WLAN networks and 2G/3G/LTE networks. An application only needs to invoke an application programming interface (Application Programming Interface, API) provided by the connection manager, and the connection manager can automatically select a WLAN network or a 2G/3G/LTE network to establish a connection. The android and Apple iOS operating systems can also provide management on WLAN networks and 2G/3G/LTE networks, but the difference lies in that: the operating systems can notify states of the WLAN networks and the 2G/3G/LTE networks to an application, and then the application selects a proper connection.

Or, the indication message may also carry network identifier information indicating a WLAN network assessed by the terminal, for example, the indication message carries one or more service set identifiers (Service Set Identifier, SSID) and/or one or more channel numbers (channel), and then the terminal accesses a corresponding WLAN network according to the SSID and/or the channel number. The SSID is an identifier of a WLAN network, and can indicate a WLAN network that needs to be accessed, and the channel number indicates a frequency point used by a WLAN network corresponding to the SSID.

Step 12: After accessing the WLAN network, the terminal transmits, directly over the WLAN network, service data that needs to be distributed.

Further, in an embodiment, a foregoing indication information is received by an application layer module of the terminal, that is, it is received by a WLAN management module of the terminal, where the WLAN management module is located at an application layer. Then, after the function of the WLAN is enabled, the application or the operating system of the terminal directly sends service data, which needs to be distributed, to a physical layer WLAN module corresponding to the enabled function of the WLAN, so as to transmit the service data over the WLAN network.

After receiving the indication message, the WLAN management module may trigger a WLAN module corresponding to the function of the WLAN. For example, after receiving the indication message, the WLAN management module of the terminal sends a trigger message to a WLAN module in the terminal to trigger the WLAN module to access a WLAN network. The WLAN module may be a module located at a physical layer.

In addition, an operating system may learn whether the WLAN module is enabled. If distribution is controlled by the operating system, after learning that the WLAN module is enabled, the operating system may send data, which needs to be distributed, to the WLAN module over an interface between the operating system and the WLAN module, where the data is further transmitted over the WLAN network. If distribution is controlled by an application, after learning that the WLAN module is enabled, the operating system sends a message to the application to inform the application that the WLAN module is enabled. Then, the application may send data, which needs to be distributed, to the WLAN module over an interface between the application and the WLAN module, where the data is further transmitted over the WLAN network. On the contrary, if distribution is determined by an LTE module, there is no data transmission interface between the operating system (or the application) and the WLAN module, and the operating system (or the application) needs to send data to the LTE module. The LTE module determines whether the data is transmitted over an LTE network, or transmitted over a WLAN network through an interface between the LTE module and the WLAN module. In the embodiment of the present invention, the LTE module does not need to control the WLAN module. Therefore, no interface between the LTE module and the WLAN module is needed.

In addition, this embodiment may further include a step of disabling the WLAN module, for example, further including: detecting, by the terminal, the status of data transmission performed the terminal over the WLAN network; if a duration when the terminal transmits no data over the WLAN network reaches a set duration, disabling, by the terminal, the function of the WLAN of the terminal.

In this embodiment, when a data service needs to be implemented, an indication message is received from a network side; and a function of a WLAN may be triggered according to the indication message to access the WLAN network, so that data can be distributed to the WLAN network. In this way, the function of the WLAN is not enabled all the time, but is enabled only when a data service needs to be implemented, thereby reducing power consumption of the terminal. In addition, when distribution is needed, the function of the WLAN is triggered by using the indication message, so that the WLAN network can be timely accessed to implement the distribution, which avoids a problem that distribution cannot be implemented because the function of the WLAN is disabled and thereby improves the effect of the distribution.

Further, if transmitted data is distributed by an LTE network to the WLAN for transmission, an application or an operating system of the terminal sends data to an LTE module at a lower layer, and the LTE module determines whether distribution is needed. If distribution is needed, the LTE module triggers a WLAN module. In this manner, the LTE module needs to be improved so that the LTE module has not only an LTE network transmission function but also functions of determining and triggering. However, in the embodiment of the present invention, the foregoing determining and triggering are performed by a WLAN management module which is located at an application layer and can be implemented by software. After the function of the WLAN is enabled, an application or operating system of the terminal sends data, which needs to be distributed, to the enabled WLAN module directly over an interface between the application or the operating system and the WLAN module, where the data does not need to be further distributed by the LTE module. This can avoid changes to an LTE module at a lower layer. For example, the LTE module may be unchanged so long as the LTE module has the LTE network transmission function, and the functions of determining and triggering are not needed additionally.

It should be noted that the accessing a WLAN network may include a total process of access, authentication, and obtaining IP address. The WLAN network may be a network irrelevant to a mobile network that transmits data when the WLAN network is not accessed. Therefore, in the embodiment of the present invention, an IP address obtained by a UE when accessing a WLAN network may be different from an IP address obtained by the UE when not accessing the WLAN network. In contrast, if distribution processing is performed by the LTE module, an IP address used when the UE accesses an LTE network is still used as a source address when the UE accesses a WLAN.

FIG. 2 is a schematic flowchart of a method according to a second embodiment of the present invention, where the method includes the following:
Step 21: An access network of a cellular network determines that service data of a terminal needs to be distributed to a WLAN network.

Optionally, the method further includes: receiving, by the access network of the cellular network, a PDP context message sent by the terminal, indicating that the terminal needs to implement a data service and determining that the terminal has a WLAN access capability; or, establishing, by the access network of the cellular network, a bearer with the terminal, and transmitting service data over the established bearer, so that the access network of the cellular network learns that the terminal needs to implement a data service and determines that the terminal has a WLAN access capability.

Step 22: The access network of the cellular network sends an indication message to the terminal, where the indication message is used to instruct the terminal to enable a function of a WLAN and access the WLAN network, and distributes service data, which needs to be distributed, directly to the accessed WLAN network for transmission.

Optionally, the indication message may be received by the application layer of the terminal and cause an application or an operating system of the terminal to send service data, which needs to be distributed, directly to a WLAN module at a physical layer, so as to distribute the service data to the accessed WLAN network for transmission.

Optionally, the indication message is sent by the access network of the cellular network when learning that the terminal needs to implement a data service and determining that the terminal has a WLAN access capability.

As described in the first embodiment, the indication message may not carry network identifier information indicating a WLAN network accessed by the terminal, or the indication message may carry network identifier information indicating a WLAN network accessed by the terminal, for example, an SSID and/or a channel number. The access network of the cellular network may determine, according to preset correspondence between related information of the terminal and network identifier information of a WLAN network, and related information of the terminal reported by the terminal, network identifier information of the corresponding WLAN network. The related information of the terminal at least includes location information of the terminal. It is assumed that related information of a terminal is location information of the terminal and a terminal type and that network identifier information of a WLAN network is an SSID, and correspondence stored in the access network of the cellular network is shown in Table 1.

**Table 1**

| Location information | Terminal type | SSID |
|---|---|---|
| Cell1 | All users of China Mobile | SSID1 |
| Cell1 | Some specific users of China Mobile | SSID2 |
| Cell2 | All users of China Mobile | SSID1 |

According to Table 1, if the location information reported by the terminal is cell1 and the terminal type reported is a user but not a specific user of China Mobile, the SSID obtained by the access network of the cellular network is SSID1.

In addition, the foregoing correspondence may be updated, and may be created or updated by using at least one of the following methods: Method 1: background configuration, for example, manual configuration and update; Method 2: a module configured to scan WLAN networks is installed on the network side, and update is performed according to a scanning result; for example, if the module configured to scan WLAN networks finds, by scanning, that there are WLAN1 and WLAN2 around the cell1, the network device can update the SSID corresponding to cell1 to SSID1 corresponding to WLAN1 and SSID2 corresponding to WLAN2; Method 3: update is performed according to the management of an access controller (Access Controller, AC), where the AC is a device configured to manage WLAN networks and is able to learn the change of a WLAN network corresponding to a location, and therefore, the network device can perform corresponding update according to the management of the AC; and Method 4: update is performed according to a result reported by the terminal, for example, the terminal can learn, by scanning, WLAN network identifier information of an accessible WLAN network, and then notifies the access network of the cellular network of the WLAN network identifier information of the WLAN network that can be accessed, and the access network of the cellular network can perform update according to this.

In this embodiment, when it is learned that a terminal needs to implement a data service, an indication message is sent to the terminal to trigger a function of a WLAN of the terminal side to access the WLAN network, so that data can be distributed to the WLAN network. In this way, the function of the WLAN is not enabled all the time, but is enabled only when a data service needs to be implemented, thereby reducing power consumption of the terminal side. In addition, when distribution is needed, the function of the WLAN is triggered by using the indication message, so that the WLAN network can be timely accessed to implement the distribution, which avoids a problem that distribution cannot be implemented because the function of the WLAN is disabled and thereby improves the effect of the distribution.

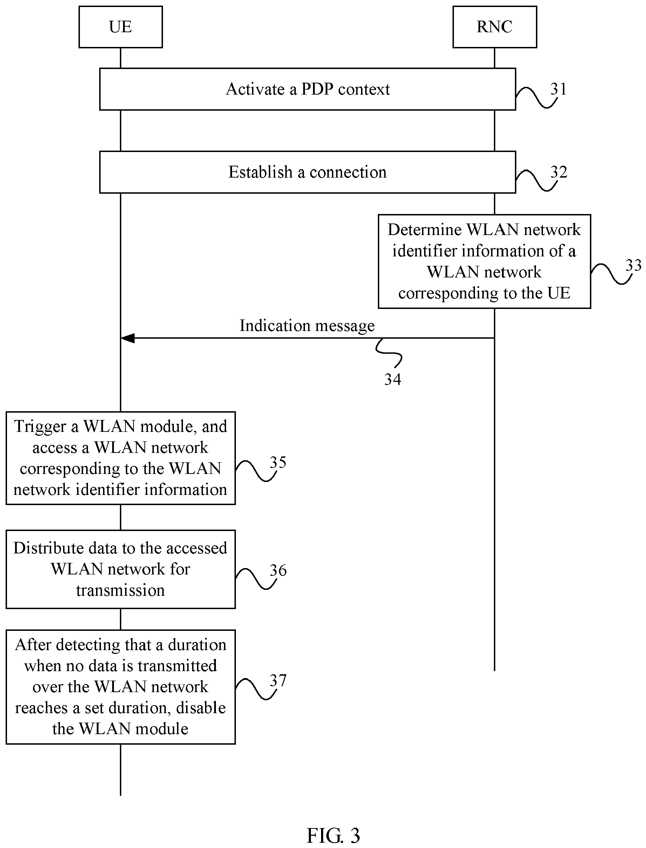

FIG. 3 is a schematic flowchart of a method according to a third embodiment of the present invention. In this embodiment, it is assumed that a terminal side and a network side establish a connection for message interaction. In addition, in this embodiment, a terminal is exemplarily a user equipment (User Equipment, UE) and a network device is exemplarily a radio network controller (Radio Network Controller, RNC). Of course, the network device may also be a base station (eNodeB), a base station controller (Base Station Controller, BSC), or the like.

As shown in FIG. 3, this embodiment includes the following:
Step 31: When a UE needs to implement a data service, the UE initiates a process of activating a PDP context with an RNC.

By activating the PDP context, the network side can learn that the UE needs to implement a data service, and further learn that the UE probably needs distribution. Then, the network side can deliver a message instructing the UE to enable a WLAN module.

Step 32: The UE establishes a connection with the RNC.

After the PDP context is activated, the UE may obtain an IP address. Then, a WLAN management module in the UE may initiate a connection establishment process with a WLAN management module in the RNC by using the IP address as a source IP address. The established connection may be a transport control protocol (Transport Control Protocol, TCP) connection or a user datagram protocol (User Datagram Protocol, UDP) connection.

Or, the UE may activate another PDP context to obtain an IP address, and initiate the foregoing connection by using the IP address obtained by the re-activated PDP context as a source IP address.

Or, the UE may initiate the foregoing connection by using a set source IP address; for example, the set source address is 192.168.0.2.

In addition, in the foregoing process of establishing a connection, a destination IP address may be a set value, for example, 192.168.0.1. The UE transmits an uplink IP packet to the RNC by using the source IP address obtained by using the foregoing method and the set destination IP address. If the RNC determines that a destination address of the IP packet is the set destination IP address, the RNC forwards the IP packet to a WLAN management module of the network side to establish a connection. In addition, the RNC may make determining according to a destination IP address and a destination port number. For example, if the destination IP address is the set destination address and the destination port number is a set port number, the RNC forwards the IP packet to the WLAN management module of the network side to establish a connection.

Step 33: The RNC determines, according to set correspondence, WLAN network identifier information of a WLAN network corresponding to the UE.

For example, after the UE establishes a connection with the RNC, the UE may send related information of the UE to the RNC. For example, the UE notifies location information and type of the UE to the RNC. Then, the RNC can determine a corresponding SSID by using the correspondence shown in Table 1.

This embodiment is described by assuming that the RNC indicates a WLAN network accessed by the UE, and of course, the RNC may make no indication, and in this case, WLAN network identifier information of a WLAN network does not need to be determined.

Step 34: The RNC sends an indication message to the UE, where the indication message carries WLAN network identifier information of a WLAN network.

For example, after determining an SSID and/or a channel number according to the correspondence, the SSID and/or the channel number is carried in the indication message and sent to the UE.

Of course, if the network side does not need to indicate an accessed WLAN, the indication message may not carry WLAN network identifier information of a WLAN network.

Step 35: The UE triggers a WLAN module, and accesses a WLAN network corresponding to the WLAN network identifier information.

For example, after receiving the indication message, the WLAN management module in the UE triggers the WLAN module, and then accesses the corresponding WLAN network according to the network identifier information of the WLAN network in the indication message.

Step 36: The UE distributes data to the accessed WLAN network for transmission.

It should be noted that the distribution is directly performed by an application or an operating system and does not need to be controlled by a lower layer module (for example, an LTE module) to avoid modification to a current chip.

Step 37: After detecting that a duration when no data is transmitted over the WLAN network reaches a set duration, the UE disables the WLAN module.

In this embodiment, when a data service needs to be implemented, an indication message is received from a network side; and a function of a WLAN may be triggered according to the indication message to access the WLAN network, so that data can be distributed to the WLAN network. In this way, the function of the WLAN is not enabled all the time, but is enabled only when a data service needs to be implemented, thereby reducing power consumption of the terminal side. In addition, when distribution is needed, the function of the WLAN is triggered by using the indication message, so that the WLAN network can be timely accessed to implement the distribution, which avoids a problem that distribution cannot be implemented because the function of the WLAN is disabled and thereby improves the effect of the distribution.

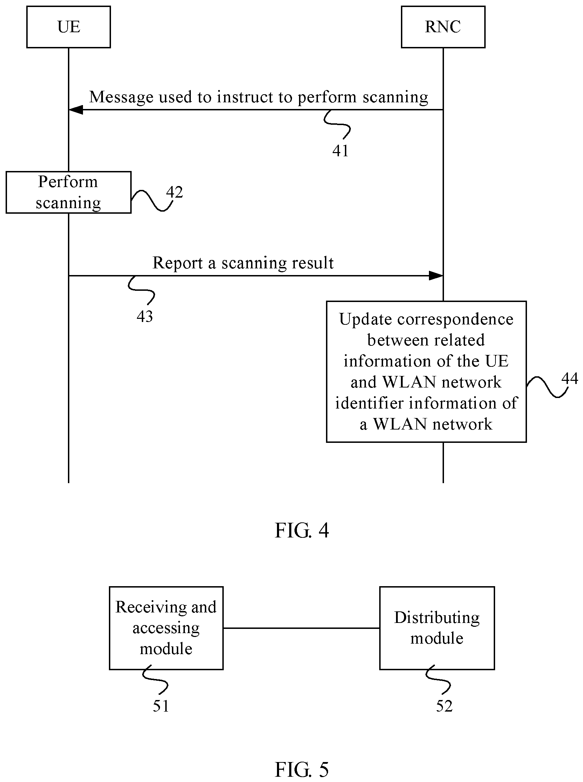

FIG. 4 is a schematic flowchart of a method according to a fourth embodiment of the present invention. In this embodiment, it is assumed that a UE reports information to update the foregoing correspondence stored on the network side. As shown in FIG. 4, this embodiment includes the following:
Step 41: An RNC sends, to a UE, a message used to instruct to perform scanning.
Step 42: The UE performs scanning.

For example, a WLAN module in the UE is enabled to scan WLANs around the UE, for example, the WLAN module finds, by scanning, that available WLANs are WLAN1 and WLAN2.

Step 43: The UE reports a scanning result to the RNC.

For example, the UE reports SSID1 corresponding to WLAN1 and SSID2 corresponding to WLAN2 to the RNC.

Step 44: The RNC updates correspondence between related information of the UE and WLAN network identifier information of a WLAN network.

For example, if the location information of the UE is cell1, an SSID corresponding to cell1 is updated to SSID1 and SSID2. Then, when it is learned that the UE needs to implement a data service, the SSID1 and the SSID2 are sent to the UE. If the UE obtains information of more than one WLAN, the UE can select a WLAN to access according to a set policy, for example, selecting one of the more than one WLAN at random or according to priorities, or distributing data to more than one WLAN network for transmission.

The above description assumes that the UE performs scanning after receiving, from the RNC, a message used to instruct to scan. Alternatively, the UE may perform scanning after failing to access a corresponding WLAN network according to WLAN network identifier information delivered by the RNC, and send a scanning result to the RNC. For example, when the RNC delivers SSID1 but the UE cannot find a WLAN network corresponding to SSID1, the UE performs scanning and reports a scanning result to trigger the RNC to update the correspondence.

Based on the foregoing embodiment, the correspondence can be updated in this embodiment, which avoids that the UE fails to access a WLAN network, and thereby further improves the effect of the distribution.

FIG. 5 is a schematic structural diagram of a terminal according to a fifth embodiment of the present invention, where the terminal includes a receiving and accessing module 51 and a distributing module 52. The receiving and accessing module 51 is configured to receive an indication message sent by an access network of a cellular network, where the indication message is used to trigger the terminal to enable a function of a WLAN and access the WLAN network. The distributing module 52 is configured to transmit, according to the WLAN network accessed by the receiving and accessing module, service data, which needs to be distributed, directly over the WLAN network.

In an embodiment, the terminal may further include: a notifying module, configured to send an activate PDP context message to the access network of the cellular network, so that the access network of the cellular network determines that the terminal needs to implement a data service and that the terminal has a WLAN access capability. The receiving and accessing module 51 is specifically configured to receive the indication message which is sent by the access network of the cellular network when the access network of the cellular network determines that the terminal needs to implement a data service and the terminal has a WLAN access capability. or,

In an embodiment, the terminal may further include: a bearer establishing module, configured to establish a bearer with the access network of the cellular network and transmit service data over the established bearer, so that the access network of the cellular network learns that the terminal needs to implement a data service and determines that the terminal has a WLAN access capability. The receiving and accessing module 51 is specifically configured to receive the indication message which is sent by the access network of the cellular network when the access network of the cellular network determines that the terminal needs to implement a data service and the terminal has a WLAN access capability.

Optionally, the receiving and accessing module 51 is specifically configured to establish an IP connection with the access network of the cellular network, and receive the indication message over the established IP connection, or receive the indication message over an RRC connection with the access network of the cellular network.

In an embodiment, the indication message carries WLAN network identifier information of a WLAN network accessed by the terminal, and the terminal further includes a sending module, where the sending module is configured to send related information of the terminal to the access network of the cellular network, so that the network side determines, according to correspondence between the related information of the terminal and WLAN network identifier information, a WLAN network accessed by the terminal and WLAN network identifier information of the WLAN network, where the related information of the terminal includes location information of the terminal.

The terminal may further include a scanning module and a reporting module. The scanning module is configured to scan accessible WLAN networks after receiving a message used to instruct to scan WLAN networks and sent by the access network of the cellular network, or after the receiving and accessing module fails to access a WLAN network. The reporting module is configured to send WLAN network identifier information of an accessible WLAN network obtained by scanning by the scanning module to the access network of the cellular network, so that the access network of the cellular network creates or updates, according to the WLAN network identifier information, correspondence between the related information of the terminal and the WLAN network identifier information.

The terminal may further include a detecting module, where the detecting module is configured to: detect the status of data transmission performed by the terminal over the WLAN network; and if a duration when the terminal transmits no data over the WLAN network reaches a set duration, disable the function of the WLAN of the terminal.

In an embodiment, the receiving module may be located at an application layer, and the distributing module may include an application or an operating system and a WLAN module which is located at a physical layer and corresponding to the function of the WLAN. The application or the operating system is configured to send service data, which needs to be distributed, to the WLAN module directly after the function of the WLAN is enabled. The WLAN module is configured to access a WLAN network, and transmit, over the WLAN network, the service data that needs to be distributed.

In this embodiment, when a data service needs to be implemented, an indication message is received from a network side; and a function of a WLAN may be triggered according to the indication message to access the WLAN network, so that data can be distributed to the WLAN network. In this way, the function of the WLAN is not enabled all the time, but is enabled only when a data service needs to be implemented, thereby reducing power consumption of the terminal. In addition, when distribution is needed, the function of the WLAN is triggered by using the indication message, so that the WLAN network can be timely accessed to implement the distribution, which avoids a problem that distribution cannot be implemented because the function of the WLAN is disabled and thereby improves the effect of the distribution.

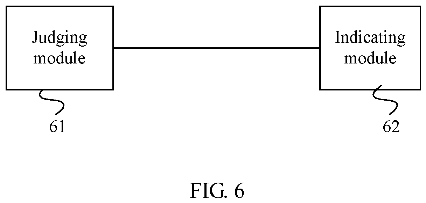

FIG. 6 is a schematic structural diagram of a network device according to a sixth embodiment of the present invention, where the network device includes a judging module 61 and an indicating module 62. The judging module 61 is configured to determine that service data of a terminal needs to be distributed to a WLAN network. The indicating module 62 is configured to send an indication message to the terminal according to that the judging module determines that service data of the terminal needs to be distributed to the WLAN network, where the indication message is used to instruct the terminal to enable a function of a WLAN and access the WLAN network, and distribute service data, which needs to be distributed, directly to the accessed WLAN network for transmission.

Optionally, the indication message may be received by the application layer of the terminal and cause an application or an operating system of the terminal to send service data, which needs to be distributed, directly to a WLAN module at a physical layer, so as to distribute the service data to the accessed WLAN network for transmission.

In an embodiment, the network device may further include: a determining module, configured to determine, according to an activate packet data protocol PDP context message sent by the terminal, that the terminal needs to implement a data service and that the terminal has a WLAN access capability, or determine, according to a bearer established with the terminal and a fact that there is service data transmitted over the established bearer, that the terminal needs to implement a data service and that the terminal has a WLAN access capability. The indicating module is specifically configured to send the indication message according to that the determining module determines that the terminal needs to implement a data service and the terminal has a WLAN access capability.

In an embodiment, the device may further include a receiving module, where the receiving module is configured to receive related information of the terminal sent by the terminal, and determine, according to correspondence between the related information of the terminal and WLAN network identifier information, a WLAN network accessed by the terminal and WLAN network identifier information of the WLAN network, where the related information of the terminal includes location information of the terminal. The indicating module is specifically configured to send, to the terminal, an indication message that carries the WLAN network identifier information of the WLAN network after the judging module determines that service data of the terminal needs to be distributed to a WLAN network, where the indication message is used to instruct the terminal to enable a function of a WLAN and access the WLAN network indicated by the WLAN network identifier information, and distribute service data, which needs to be distributed, directly to the accessed WLAN network for transmission.

In an embodiment, the device may further include an updating module, configured to create or update correspondence between related information of a terminal and WLAN network identifier information by using at least one of the following methods: background configuration, updating according to scanning, updating by an access controller AC, and updating according to a result reporting by the terminal, where the result reported by the terminal includes WLAN network identifier information of an accessible WLAN network determined by the terminal by scanning.

For other structures and functions of the foregoing device, reference may be made to the foregoing method embodiments, and details are not further described herein.

In this embodiment, when it is learned that a terminal needs to implement a data service, an indication message is sent to the terminal to trigger a function of a WLAN of the terminal side to access the WLAN network, so that data can be distributed to the WLAN network. In this way, the function of the WLAN is not enabled all the time, but is enabled only when a data service needs to be implemented, thereby reducing power consumption of the terminal side. In addition, when distribution is needed, the function of the WLAN is triggered by using the indication message, so that the WLAN network can be timely accessed to implement the distribution, which avoids a problem that distribution cannot be implemented because the function of the WLAN is disabled and thereby improves the effect of the distribution.

It should be understood that, related features in the foregoing method and device may be referenced mutually. In addition, "first" and "second" in the foregoing embodiments are used to distinguish embodiments, but do not represent superiority or inferiority of all embodiments.

A person of ordinary skill in the art should understand that, all or a part of the steps of the foregoing method embodiments may be implemented by a program instructing relevant hardware. The program may be stored in a computer readable storage medium. When the program runs, the steps of the foregoing method embodiments are performed. The storage medium may be any medium that is capable of storing program codes, such as a ROM, a RAM, a magnetic disk, and an optical disk.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that modifications may still be made to the technical solutions described in the foregoing embodiments, or equivalent replacements may still be made to some technical features thereof, without departing from the scope of the technical solutions of the embodiments of the present invention.

## Claims

1. A method for distributing data to a wireless local area network, comprising:
receiving (11), by a terminal, an indication message sent by an access network of a cellular network, wherein the indication message is used to indicate a wireless local area network, WLAN, which the terminal can access, and to trigger the terminal to enable a function of the WLAN network and access the WLAN network, wherein the indication message carries WLAN network identifier information of the WLAN network accessed by the terminal; and transmitting (12), by the terminal, directly over the WLAN network, service data that needs to be distributed after accessing the WLAN network; **characterized in that** the method further comprises:
sending, by the terminal, related information of the terminal to the access network of the cellular network, causing the network to determine, according to correspondence between the related information of the terminal and WLAN network identifier information, the WLAN network accessed by the terminal and the WLAN network identifier information of the WLAN network, wherein the related information of the terminal comprises location information of the terminal.

2. The method according to claim 1, wherein the receiving (11), by a terminal, an indication message sent by an access network of a cellular network comprises:
establishing an Internet Protocol, IP, connection with the access network of the cellular network, and receiving the indication message through the established IP connection;
or,
receiving the indication message over a radio resource control, RRC, connection with the access network of the cellular network.

3. The method according to claim 2, wherein the establishing an IP connection with the access network of the cellular network comprises:
sending, to the access network of the cellular network, by using an IP address obtained after a PDP context is activated as a source address of the terminal, a message, to establish an IP connection with the network, wherein a destination address of the message is a set destination IP address, and/or a destination port number of the message is a set port number;
or,
sending, to the access network of the cellular network, by using a set source address, a message, to establish an IP connection with the access network of the cellular network, wherein a destination address of the message is a set destination IP address, and/or a destination port number of the message is a set destination port number.

4. The method according to claim 1, wherein:
the location information comprises an ID of a cell wherein the terminal is located or longitude and altitude information of the terminal;
and/or,
the WLAN network identifier information of the WLAN network comprises one or more service set identifiers, SSIDs, and/or at least one channel number.

5. The method according to claim 1, further comprising:
after receiving a message used to instruct to scan a WLAN network and sent by the network, or after failing to access the WLAN, scanning, by the terminal, a accessible WLAN network; and
sending, by the terminal, WLAN network identifier information of an accessible WLAN network obtained by scanning to the access network of the cellular network, causing the access network of the cellular network to creates or update, according to the received WLAN network identifier information, the correspondence between the related information of the terminal and the WLAN network identifier information.

6. The method according to any one of claims 1 to 5, wherein:
the receiving, by a terminal, an indication message sent by an access network of a cellular network comprises:
receiving, by an application layer module of the terminal, the indication message sent by the access network of the cellular network; and
the transmitting, by the terminal, directly over the WLAN network, service data that needs to be distributed after accessing the WLAN network comprises:
after the function of the WLAN is enabled, transmitting, by an application or an operating system of the terminal, the service data, which needs to be distributed, directly to a WLAN physical layer module corresponding to the enabled function of the WLAN, causing the WLAN physical layer module to transmit, over the WLAN network, the service data that needs to be distributed.

7. A method for distributing data to a wireless local area network, comprising:
determining, by a network device of a cellular network, that service data of a terminal needs to be distributed to a wireless local area network, WLAN, network, and sending an indication message to the terminal, wherein the indication message carries WLAN network identifier information and is used to indicate a WLAN network which the terminal can access, and to instruct the terminal to enable a function of a WLAN network and access the WLAN network, wherein, sending by the network device the indication message to the terminal causes the terminal to distribute service data, which needs to be distributed, directly to the accessed WLAN network for transmission; **characterized in that** the method further comprises:
receiving, by the network device, related information of the terminal sent by the terminal, causing the WLAN network accessed by the terminal and WLAN network identifier information of the WLAN network to be determined according to correspondence between the related information of the terminal and WLAN network identifier information, wherein the related information of the terminal comprises location information of the terminal.

8. The method according to claim 7, further comprising:
receiving, by the network device of the cellular network, an activate packet data protocol, PDP, context message sent by the terminal, and determining, according to the activate PDP context message, that the terminal needs to implement a data service and that the terminal has a WLAN access capability;
wherein the determining, by the network device of a cellular network, that service data of a terminal needs to be distributed to a WLAN network comprises:
determining, by the network device of the cellular network according to that the terminal needs to implement a data service and the terminal has a WLAN access capability, that service data of the terminal needs to be distributed to the WLAN network.

9. The method according to claim 7, wherein the sending an indication message to the terminal comprises:
establishing an Internet Protocol, IP, connection with the terminal, and sending the indication message over the IP connection;
or,
sending the indication message to the terminal over a radio resource control, RRC, connection.

10. A terminal, comprising:
a receiving and accessing module (51), configured to receive an indication message sent by an access network of a cellular network, wherein the indication message is operatively used by the terminal to indicate a wireless local area network, WLAN, which the terminal can access, and to trigger the terminal to enable a function of the WLAN network and access the WLAN network; wherein the indication message carries WLAN network identifier information of the WLAN network accessed by the terminal;
wherein the terminal further comprises:
a distributing module (52), configured to transmit, according to the WLAN network accessed by the receiving and accessing module, service data, which needs to be distributed, directly over the WLAN network; and the terminal further **characterized in that** it comprises a reporting module, configured to send related information to the access network of the cellular network, causing the access network of the cellular network to determine, according to correspondence between related information of the terminal and WLAN network identifier information, the WLAN network accessed by the terminal and the WLAN network identifier information of the WLAN network, wherein the related information of the terminal comprises location information of the terminal.

11. A network device, comprising:
a judging module (61), configured to determine that service data of a terminal needs to be distributed to a wireless local area network, WLAN, network;
an indicating module (62), configured to send an indication message to the terminal according to that the judging module determines that service data of the terminal needs to be distributed to a WLAN network, wherein the indication message carries WLAN network identifier information and is configured to instruct the terminal to enable a function of a WLAN network and to indicate the terminal a WLAN network which the terminal can access, and to instruct the terminal to distribute service data, which needs to be distributed, directly to the accessed WLAN network for transmission;
**characterized in that**:
the receiving module is configured to receive related information of the terminal sent by the terminal, determine, according to correspondence between the related information of the terminal and WLAN network identifier information, the WLAN network accessed by the terminal and WLAN network identifier information of the WLAN network, wherein the related information of the terminal comprises location information of the terminal.

12. The device according to claim 11, further comprising:
a determining module, configured to determine, according to an activate packet data protocol, PDP, context message sent by the terminal, that the terminal needs to implement a data service and that the terminal has a WLAN access capability; or, determine, according to a bearer established with the terminal and that there is service data transmitted over the established bearer, that the terminal needs to implement a data service and that the terminal has a WLAN access capability;
wherein the indicating module is configured to send the indication message according to that the determining module determines that the terminal needs to implement a data service and the terminal has a WLAN access capability.

## Patentansprüche

1. Verfahren zum Verteilen von Daten an ein drahtloses lokales Netzwerk, das die folgenden Schritte umfasst:
Empfangen (11), durch ein Endgerät, einer Anzeigenachricht, die von einem Zugriffsnetzwerk eines Mobilfunknetzes gesendet wurde, wobei die Anzeigenachricht verwendet wird zum Anzeigen eines drahtlosen lokalen Netzwerks, WLAN, auf das das Endgerät zugreifen kann, und zum
Anstoßen des Endgeräts, eine Funktion des WLAN-Netzwerks freizuschalten und auf das WLAN-Netzwerk zuzugreifen, wobei die Anzeigenachricht WLAN-Netzwerkkennungsinformationen des WLAN-Netzwerks, auf das vom Endgerät zugegriffen wird, führt; und
Übermitteln (12), durch das Endgerät, direkt über das WLAN-Netzwerk, von Dienstdaten, die nach dem Zugreifen auf das WLAN-Netzwerk verteilt werden müssen;
**dadurch gekennzeichnet, dass** das Verfahren ferner den folgenden Schritt umfasst:
Senden, durch das Endgerät, von Bezugsinformationen des Endgeräts an das Zugriffsnetzwerk des Mobilfunknetzes, was das Netzwerk veranlasst, gemäß einer Übereinstimmung zwischen den Bezugsinformationen des Endgeräts und den WLAN-Netzwerkkennungsinformationen, das WLAN-Netzwerk, auf das das Endgerät zugreift, und die WLAN-Netzwerkkennungsinformationen des WLAN-Netzwerks zu bestimmen, wobei die Bezugsinformationen des Endgeräts Ortsinformationen des Endgeräts umfassen.

2. Verfahren nach Anspruch 1, wobei das Empfangen (11), durch ein Endgerät, einer Anzeigenachricht, die von einem Zugriffsnetzwerk eines Mobilfunknetzes gesendet wurde, die folgenden Schritte umfasst:
Herstellen einer Internet-Protokoll-Verbindung bzw. IP-Verbindung mit dem Zugriffsnetzwerk des Mobilfunknetzes und Empfangen der Anzeigenachricht durch die hergestellte IP-Verbindung;
oder
Empfangen der Anzeigenachricht über eine Funkressourcensteuerung-Verbindung bzw. RRC-Verbindung mit dem Zugriffsnetzwerk des Mobilfunknetzes.

3. Verfahren nach Anspruch 2, wobei das Herstellen einer IP-Verbindung mit dem Zugriffsnetzwerk des Mobilfunknetzes die folgenden Schritte umfasst:
Senden, an das Zugriffsnetzwerk des Mobilfunknetzes, unter Verwendung einer IP-Adresse, die erhalten wird, nachdem ein PDP-Kontext als eine Quelladresse des Endgeräts aktiviert wurde, einer Nachricht zum Herstellen einer IP-Verbindung mit dem Netzwerk, wobei eine Zieladresse der Nachricht eine eingestellte Ziel-IP-Adresse ist und/oder eine Zielportnummer der Nachricht eine eingestellte Portnummer ist;
oder
Senden, an das Zugriffsnetzwerk des Mobilfunknetzes, unter Verwendung einer eingestellten Quelladresse, einer Nachricht zum Herstellen einer IP-Verbindung mit dem Zugriffsnetzwerk des Mobilfunknetzes, wobei eine Zieladresse der Nachricht eine eingestellte IP-Adresse ist und/oder eine Zielportnummer der Nachricht eine eingestellte Zielportnummer ist.

4. Verfahren nach Anspruch 1, wobei:
die Ortsinformationen eine ID einer Zelle, in der sich das Endgerät befindet, oder Längen- und Höheninformationen des Endgeräts, umfassen;
und/oder
die WLAN-Netzwerkkennungsinformationen des WLAN-Netzwerks eine oder mehrere Diensteinstellungskennungen, SSIDs, und/oder mindestens eine Kanalnummer umfassen.

5. Verfahren nach Anspruch 1, das ferner die folgenden Schritte umfasst:
nach Empfangen einer Nachricht, die verwendet wird anzuweisen, ein WLAN-Netzwerk zu scannen, und von dem Netzwerk gesendet wurde, oder nachdem Zugriff auf das WLAN fehlgeschlagen ist, Scannen, durch das Endgerät, eines zugreifbaren WLAN-Netzwerks; und
Senden, durch das Endgerät, von WLAN-Netzwerkkennungsinformationen eines zugreifbaren WLAN-Netzwerks, die durch Scannen erhalten wurden, an das Zugriffsnetzwerk des Mobilfunknetzes, was das Zugriffsnetzwerk des Mobilfunknetzes veranlasst, gemäß den empfangenen WLAN-Netzwerkkennungsinformationen, die Übereinstimmung zwischen den Bezugsinformationen des Endgeräts und den WLAN-Netzwerkkennungsinformationen zu erzeugen oder zu aktualisieren.

6. Verfahren nach einem der Ansprüche 1 bis 5, wobei:
das Empfangen, durch ein Endgerät, einer Anzeigenachricht, die von einem Zugriffsnetzwerk eines Mobilfunknetzes gesendet wurde, den folgenden Schritt umfasst:
Empfangen, durch ein Anwendungsschichtmodul des Endgeräts, der Anzeigenachricht, die von dem Zugriffsnetzwerk des Mobilfunknetzes gesendet wurde; und
das Übermitteln, durch das Endgerät, direkt über das WLAN-Netzwerk, von Dienstdaten, die nach dem Zugreifen auf das WLAN-Netzwerk verteilt werden müssen, den folgenden Schritt umfasst:
nachdem die Funktion des WLANs freigeschaltet wurde, Übermitteln, durch eine Anwendung oder ein Betriebssystem des Endgeräts, der Dienstdaten, die verteilt werden müssen, direkt an ein WLAN-Anwendungsschichtmodul, das der freigeschalteten Funktion des WLANs entspricht, was das WLAN-Anwendungsschichtmodul veranlasst, die Dienstdaten, die verteilt werden müssen, zu übermitteln.

7. Verfahren zum Verteilen von Daten an ein drahtloses lokales Netzwerk, das die folgenden Schritte umfasst:
Bestimmen, durch eine Netzwerkvorrichtung eines Mobilfunknetzes, dass Dienstdaten eines Endgeräts an ein drahtloses lokales Netzwerk bzw. WLAN-Netzwerk verteilt werden müssen, und Senden einer Anzeigenachricht an das Endgerät, wobei die Anzeigenachricht WLAN-Netzwerkkennungsinformationen führt und verwendet wird zum Anzeigen eines WLAN-Netzwerks, auf das das Endgerät zugreifen kann, und zum Anweisen des Endgeräts, eine Funktion eines WLAN-Netzwerks freizuschalten und auf das WLAN-Netzwerk zuzugreifen, wobei Senden, durch die Netzwerkvorrichtung, der Anzeigenachricht an das Endgerät das Endgerät veranlasst, Dienstdaten, die verteilt werden müssen, direkt an das zugegriffene WLAN-Netzwerk zur Übermittlung zu verteilen;
**dadurch gekennzeichnet, dass** das Verfahren ferner den folgenden Schritt umfasst:
Empfangen, durch die Netzwerkvorrichtung, von Bezugsinformationen des Endgeräts, die vom Endgerät gesendet wurden, was veranlasst, dass das WLAN-Netzwerk, auf das vom Endgerät zugegriffen wurde, und die WLAN-Netzwerkkennungsinformationen des WLAN-Netzwerks gemäß einer Übereinstimmung zwischen den Bezugsinformationen des Endgeräts und WLAN-Netzwerkkennungsinformationen bestimmt werden, wobei die Bezugsinformationen des Endgeräts Ortsinformationen des Endgeräts umfassen.

8. Verfahren nach Anspruch 7, das ferner die folgenden Schritte umfasst:
Empfangen, durch die Netzwerkvorrichtung des Mobilfunknetzes, einer Aktiviere-Paketdatenprotokoll-Kontextnachricht bzw. Aktiviere-PDP-Kontextnachricht, die vom Endgerät gesendet wurde, und Bestimmen, gemäß der Aktiviere-PDP-Kontextnachricht, dass das Endgerät einen Datendienst implementieren muss und dass das Endgerät eine WLAN-Zugriffsfähigkeit aufweist;
wobei das Bestimmen, durch die Netzwerkvorrichtung eines Mobilfunknetzes, dass Dienstdaten eines Endgeräts an ein WLAN-Netzwerk verteilt werden müssen, den folgenden Schritt umfasst:
Bestimmen, durch die Netzwerkvorrichtung des Mobilfunknetzes demgemäß, dass das Endgerät einen Datendienst implementieren muss und dass das Endgerät eine WLAN-Zugriffsfähigkeit aufweist, dass Dienstdaten des Endgeräts an das WLAN-Netzwerk verteilt werden müssen.

9. Verfahren nach Anspruch 7, wobei das Senden einer Anzeigenachricht an das Endgerät die folgenden Schritte umfasst:
Herstellen einer Internet-Protokoll-Verbindung bzw. IP-Verbindung mit dem Endgerät und Senden der Anzeigenachricht über die IP-Verbindung;
oder
Senden der Anzeigenachricht über eine Funkressourcensteuerung-Verbindung bzw. RRC-Verbindung an das Endgerät.

10. Endgerät, das Folgendes umfasst:
ein Empfangs- und Zugriffsmodul (51), das ausgelegt ist zum Empfangen einer Anzeigenachricht, die von einem Zugriffsnetzwerk eines Mobilfunknetzes gesendet wurde, wobei die Anzeigenachricht vom Endgerät betrieblich verwendet wird zum Anzeigen eines drahtlosen lokalen Netzwerks, WLAN, auf das das Endgerät zugreifen kann, und zum
Anstoßen des Endgeräts, eine Funktion des WLAN-Netzwerks freizuschalten und auf das WLAN-Netzwerk zuzugreifen; wobei die Anzeigenachricht WLAN-Netzwerkkennungsinformationen des WLAN-Netzwerks, auf das vom Endgerät zugegriffen wird, führt;
wobei das Endgerät ferner Folgendes umfasst:
ein Verteilungsmodul (52), das ausgelegt ist zum Übermitteln, gemäß dem WLAN-Netzwerk, auf das von dem Empfangs- und Zugriffsmodul zugegriffen wird, von Dienstdaten, die verteilt werden müssen, direkt über das WLAN-Netzwerk; und
wobei das Endgerät ferner **dadurch gekennzeichnet ist, dass** es
ein Meldemodul umfasst, das ausgelegt ist zum Senden von Bezugsinformationen an das Zugriffsnetzwerk des Mobilfunknetzes, was das Zugriffsnetzwerk des Mobilfunknetzes veranlasst, gemäß einer Übereinstimmung zwischen den Bezugsinformationen des Endgeräts und den WLAN-Netzwerkkennungsinformationen, das WLAN-Netzwerk, auf das das Endgerät zugreift, und die WLAN-Netzwerkkennungsinformationen des WLAN-Netzwerks zu bestimmen, wobei die Bezugsinformationen des Endgeräts Ortsinformationen des Endgeräts umfassen.

11. Netzwerkvorrichtung, die Folgendes umfasst:
ein Beurteilungsmodul (61), das ausgelegt ist zum Bestimmen, dass Dienstdaten eines Endgeräts an ein drahtloses lokales Netzwerk bzw. WLAN-Netzwerk verteilt werden müssen;
ein Anzeigemodul (62), das ausgelegt ist zum Senden einer Anzeigenachricht an das Endgerät demgemäß, dass das Beurteilungsmodul bestimmt, dass Dienstdaten des Endgeräts an ein WLAN-Netzwerk verteilt werden müssen, wobei die Anzeigenachricht WLAN-Netzwerkkennungsinformationen führt und ausgelegt ist zum Anweisen des Endgeräts, eine Funktion eines WLAN-Netzwerks freizuschalten und dem Endgerät ein WLAN-Netzwerk anzuzeigen, auf das das Endgerät zugreifen kann, und zum Anweisen des Endgeräts, Dienstdaten, die verteilt werden müssen, direkt an das zugegriffene WLAN-Netzwerk zur Übermittlung zu verteilen;
**dadurch gekennzeichnet, dass**:
das Empfangsmodul ausgelegt ist zum Empfangen von Bezugsinformationen des Endgeräts, die vom Endgerät gesendet wurden, zum Bestimmen gemäß einer Übereinstimmung zwischen den Bezugsinformationen des Endgeräts und den WLAN-Netzwerkkennungsinformationen, des WLAN-Netzwerks, auf das das Endgerät zugreift, und der WLAN-Netzwerkkennungsinformationen des WLAN-Netzwerks, wobei die Bezugsinformationen des Endgeräts Ortsinformationen des Endgeräts umfassen.

12. Vorrichtung nach Anspruch 11, die ferner Folgendes umfasst:
ein Bestimmungsmodul, das ausgelegt ist zum Bestimmen, gemäß einer Aktiviere-Paketdatenprotokoll-Kontextnachricht bzw. Aktiviere-PDP-Kontextnachricht, die vom Endgerät gesendet wurde, dass das Endgerät einen Datendienst implementieren muss und dass das Endgerät eine WLAN-Zugriffsfähigkeit aufweist; oder, zum Bestimmen, gemäß einem Träger, der mit dem Endgerät hergestellt wurde, und
demgemäß, dass es Dienstdaten gibt, die über den hergestellten Träger übermittelt werden, dass das Endgerät einen Datendienst implementieren muss und dass das Endgerät eine WLAN-Zugriffsfähigkeit aufweist;
wobei das Anzeigemodul ausgelegt ist zum Senden der Anzeigenachricht demgemäß, dass das Bestimmungsmodul bestimmt, dass das Endgerät einen Datendienst implementieren muss und dass das Endgerät eine WLAN-Zugriffsfähigkeit aufweist.

## Revendications

1. Procédé pour distribuer des données vers un réseau local sans fil, comprenant les étapes suivantes :
recevoir (11), par un terminal, un message d'indication envoyé par un réseau d'accès d'un réseau cellulaire, où le message d'indication est utilisé pour indiquer un réseau local sans fil, WLAN, auquel le terminal peut accéder, et pour déclencher le terminal pour activer une fonction du réseau WLAN et accéder au réseau WLAN, où le message d'indication achemine des informations d'identifiant de réseau WLAN du réseau WLAN accédé par le terminal ; et
transmettre (12), par le terminal, directement sur le réseau WLAN, des données de service qui doivent être distribuées après accès au réseau WLAN ;
**caractérisé en ce que** le procédé comprend en outre les étapes suivantes :
envoyer, par le terminal, des informations connexes du terminal au réseau d'accès du réseau cellulaire, amenant le réseau à déterminer, conformément à une correspondance entre les informations connexes du terminal et les informations d'identifiant de réseau WLAN, le réseau WLAN accédé par le terminal et les informations d'identifiant de réseau WLAN du réseau WLAN, où les informations connexes du terminal comprennent des informations de localisation du terminal.

2. Procédé selon la revendication 1, dans lequel la réception (11), par un terminal, d'un message d'indication envoyé par un réseau d'accès d'un réseau cellulaire comprend les étapes suivantes :
établir une connexion de protocole Internet, IP, avec le réseau d'accès du réseau cellulaire, et recevoir le message d'indication par l'intermédiaire de la connexion IP établie ;
ou,
recevoir le message d'indication sur une connexion de contrôle des ressources radio, RRC, avec le réseau d'accès du réseau cellulaire.

3. Procédé selon la revendication 2, dans lequel l'établissement d'une connexion IP avec le réseau d'accès du réseau cellulaire comprend les étapes suivantes :
envoyer, au réseau d'accès du réseau cellulaire, en utilisant une adresse IP obtenue après qu'un contexte PDP a été activé comme une adresse source du terminal, un message, pour établir une connexion IP avec le réseau, où une adresse de destination du message est une adresse IP de destination définie et/ou un numéro de port de destination du message est un numéro de port défini ;
ou,
envoyer, au réseau d'accès du réseau cellulaire, en utilisant une adresse source définie, un message, pour établir une connexion IP avec le réseau d'accès du réseau cellulaire, où une adresse de destination du message est une adresse IP de destination définie, et/ou un numéro de port de destination du message est un numéro de port de destination défini.

4. Procédé selon la revendication 1, dans lequel :
les informations de localisation comprennent un identifiant d'une cellule dans laquelle se trouve le terminal ou des informations de longitude et d'altitude du terminal ;
et/ou
les informations d'identifiant de réseau WLAN du réseau WLAN comprennent un ou plusieurs identifiants de réseau sans fil, SSID, et/ou au moins un numéro de canal.

5. Procédé selon la revendication 1, comprenant en outre les étapes suivantes :
après réception d'un message utilisé pour donner pour instruction de scanner un réseau WLAN et envoyé par le réseau, ou après avoir échoué à accéder au WLAN, scanner, par le terminal, un réseau WLAN accessible ; et
envoyer, par le terminal, des informations d'identifiant de réseau WLAN d'un réseau WLAN accessible obtenues par scannage, au réseau d'accès du réseau cellulaire, ce qui amène le réseau d'accès du réseau cellulaire à créer ou à mettre à jour,
conformément aux informations d'identifiant de réseau WLAN reçues, la correspondance entre les informations connexes du terminal et les informations d'identifiant du réseau WLAN.

6. Procédé selon l'une quelconque des revendications 1 à 5, dans lequel :
la réception, par un terminal, d'un message d'indication envoyé par un réseau d'accès d'un réseau cellulaire comprend l'étape suivante :
recevoir, par un module de couche d'application du terminal, le message d'indication envoyé par le réseau d'accès du réseau cellulaire ; et
la transmission, par le terminal, directement sur le réseau WLAN, des données de service qui doivent être distribuées après avoir accédé au réseau WLAN comprend l'étape suivante :
après que la fonction du WLAN a été activée, transmettre, par une application ou un système d'exploitation du terminal, les données de service, qui doivent être distribuées, directement à un module de couche physique WLAN correspondant à la fonction activée du WLAN, ce qui amène le module de couche physique WLAN à transmettre, sur le réseau WLAN, les données de service qui doivent être distribuées.

7. Procédé pour distribuer des données vers un réseau local sans fil, comprenant les étapes suivantes :
déterminer, par un dispositif de réseau d'un réseau cellulaire, que des données de service d'un terminal doivent être distribuées à un réseau local sans fil, WLAN, et envoyer un message d'indication au terminal, où le message d'indication achemine des informations d'identifiant de réseau WLAN et est utilisé pour indiquer un réseau WLAN auquel le terminal peut accéder, et pour donner pour instruction au terminal d'activer une fonction d'un réseau WLAN et d'accéder au réseau WLAN, où, envoyer, par le dispositif de réseau, le message d'indication au terminal amène le terminal à distribuer des données de service, qui doivent être distribuées, directement au réseau WLAN accédé pour transmission ;
**caractérisé en ce que** le procédé comprend en outre l'étape suivante :
recevoir, par le dispositif de réseau, des informations connexes du terminal envoyées par le terminal, amenant le réseau WLAN accédé par le terminal et les informations d'identifiant de réseau WLAN du réseau WLAN à être déterminés conformément à une correspondance entre les informations connexes du terminal et les informations d'identifiant de réseau WLAN, où les informations connexes du terminal comprennent des informations de localisation du terminal.

8. Procédé selon la revendication 7, comprenant en outre les étapes suivantes :
recevoir, par le dispositif de réseau du réseau cellulaire, un message de contexte de protocole de données par paquets, PDP, activé envoyé par le terminal, et déterminer, selon le message de contexte PDP activé, que le terminal doit implémenter un service de données et que le terminal dispose d'une capacité d'accès au WLAN ;
où la détermination, par le dispositif de réseau d'un réseau cellulaire, que des données de service du terminal doivent être distribuées à un réseau WLAN comprend l'étape suivante :
déterminer, par le dispositif de réseau du réseau cellulaire selon le fait que le terminal doive mettre en oeuvre un service de données et que le terminal dispose d'une capacité d'accès au WLAN, que des données de service du terminal doivent être distribuées au réseau WLAN.

9. Procédé selon la revendication 7, dans lequel l'envoi d'un message d'indication au terminal comprend les étapes suivantes :
établir une connexion de protocole Internet, IP, avec le terminal, et envoyer le message d'indication sur la connexion IP ;
ou,
envoyer le message d'indication au terminal sur une connexion de contrôle des ressources radio, RRC.

10. Terminal, comprenant :
un module de réception et d'accès (51), configuré pour recevoir un message d'indication envoyé par un réseau d'accès d'un réseau cellulaire, où le message d'indication est fonctionnellement utilisé par le terminal pour indiquer un réseau local sans fil, WLAN, auquel le terminal peut accéder, et pour déclencher le terminal pour activer une fonction du réseau WLAN et accéder au réseau WLAN ;
où le message d'indication achemine des informations d'identifiant de réseau WLAN du réseau WLAN accédé par le terminal ;
où le terminal comprend en outre :
un module de distribution (52), configuré pour transmettre, selon le réseau WLAN accédé par le module de réception et d'accès, des données de service qui doivent être distribuées directement sur le réseau WLAN ; et
le terminal est en outre **caractérisé en ce qu'**il comprend un module de compte rendu, configuré pour envoyer des informations connexes au réseau d'accès du réseau cellulaire, ce qui amène le réseau d'accès du réseau cellulaire à déterminer, selon une correspondance entre les informations connexes du terminal et les informations d'identifiant du réseau WLAN, le réseau WLAN accédé par le terminal et les informations d'identifiant de réseau WLAN du réseau WLAN, où les informations connexes du terminal comprennent des informations de localisation du terminal.

11. Dispositif de réseau, comprenant :
un module d'estimation (61), configuré pour déterminer que les données de service d'un terminal doivent être distribuées à un réseau de réseau local sans fil, WLAN ;
un module d'indication (62), configuré pour envoyer un message d'indication au terminal selon que le module d'estimation détermine que les données de service du terminal doivent être distribuées à un réseau WLAN, où le message d'indication achemine des informations d'identifiant de réseau WLAN et est configuré pour donner pour instruction au terminal d'activer une fonction d'un réseau WLAN et indiquer au terminal un réseau WLAN auquel le terminal peut accéder, et pour donner pour instruction au terminal de distribuer des données de service, qui doivent être distribuées, directement au réseau WLAN accédé pour transmission ;
**caractérisé en ce que** :
le module de réception est configuré pour recevoir des informations connexes du terminal transmises par le terminal, déterminer, en fonction de la correspondance entre les informations connexes du terminal et les informations d'identifiant de réseau WLAN, le réseau WLAN accédé par le terminal et les informations d'identifiant de réseau WLAN du réseau WLAN, où les informations connexes du terminal comprennent des informations de localisation du terminal.

12. Dispositif selon la revendication 11, comprenant en outre :
un module de détermination, configuré pour déterminer, selon un message de contexte de protocole de données par paquets, PDP, activé envoyé par le terminal, que le terminal doit implémenter un service de données et que le terminal dispose d'une capacité d'accès au WLAN ; ou déterminer, selon une porteuse établie avec le terminal et le fait qu'il y ait des données de service transmises sur la porteuse établie, que le terminal doit implémenter un service de données et que le terminal dispose d'une capacité d'accès au WLAN ;
où le module d'indication est configuré pour envoyer le message d'indication selon le fait que le module de détermination détermine que le terminal doit implémenter un service de données et que le terminal a une capacité d'accès au WLAN.
